# FASCICULE DE BREVET EUROPEEN

(11) **EP 1 675 209 B1**
(45) Date de publication et mention de la délivrance du brevet: **25.02.2009**
(21) Numéro de dépôt: 05292719.1
(22) Date de dépôt: 16.12.2005
(51) Int. Cl.: H01M 10/40

(54) **Accumulateur au lithium fonctionnant à très basse temperature**
Bei sehr niedrigen Temperaturen arbeitende Lithium-Sekundärbatterie
Lithium secondary battery operating at very low temperature

(30) Priorité: 17.12.2004 FR 0413495
(43) Date de publication de la demande: 28.06.2006
(73) Titulaire: SAFT, 93170 Bagnolet (FR)
(72) Inventeur: Siret-Falchetti, Clémence, 33520 Bruges (FR); Tessier, Cécile, 33520 Bruges (FR); Castaing, Frédéric, 33170 Gradignan (FR); Biensan, Philippe, 33360 Carignan de Bordeaux (FR)
(74) Mandataire: Hirsch & Associés

(56) Documents cités:
- EP-A- 0 548 449
- EP-A- 1 311 018
- US-A1- 2001 019 800

## Description

### DOMAINE TECHNIQUE

La présente invention concerne un accumulateur au lithium apte à fonctionner à de très basses températures (jusqu'à -60°C).

### ETAT DE LA TECHNIQUE

Un accumulateur au lithium possède un faisceau électrochimique qui comporte une électrode positive comprenant une matière électrochimiquement active capable d'insérer du lithium dans sa structure (généralement un oxyde de métal de transition le plus souvent lithié) et une électrode négative fournissant les ions lithium. Les électrodes sont placées de part et d'autre d'une membrane séparatrice généralement en polyoléfine. Le faisceau électrochimique est imprégné d'un électrolyte non aqueux solide ou liquide. L'électrolyte contient un sel de lithium dissous dans un mélange de solvants organiques.

L'électrode négative d'un accumulateur au lithium peut être constituée d'un matériau carboné, lequel possède la propriété d'insérer du lithium pendant la charge et de désinsérer le lithium pendant la décharge. Au cours de la charge, les ions lithium se réduisent en lithium à l'électrode négative et le lithium migre et s'insère dans la structure du matériau carboné.

Lorsque la charge d'un tel accumulateur se déroule à très basse température (à partir de -20°C), on observe parfois la formation d'un dépôt de lithium à la surface de l'électrode négative, due à l'augmentation de la polarisation de cette électrode. Ce dépôt est d'autant plus important que la température est basse et que le régime de décharge est élevé. Il est néfaste à la durée de vie de l'accumulateur car il réduit la capacité réversible de l'accumulateur. D'autre part sa croissance crée un danger pour l'utilisateur car elle peut provoquer une perforation du séparateur entraînant ainsi un court-circuit interne de l'accumulateur.

On recherche à réduire la polarisation de l'électrode négative lors du fonctionnement de l'accumulateur à très basses températures et on recherche un accumulateur ne présentant pas cet inconvénient.

Le document EP-A-1009057 décrit un accumulateur au lithium pouvant fonctionner à -20°C et -30°C. Il est caractérisé par un solvant comprenant un carbonate cyclique saturé, un carbonate cyclique insaturé et au moins un ester linéaire d'un acide monocarboxylique saturé et par une électrode négative possédant un liant non fluoré.

Le document JP 10144346 décrit un accumulateur au lithium contenant comme solvant de l'électrolyte un dérivé monofluoré de carbonate de diméthyle pouvant être mélangé avec d'autres solvants non aqueux dont le nombre et la nature ne sont pas spécifiquement limités. Cet accumulateur présente de bonnes performances en décharge à -10°C.

Le document JP 10247519 décrit un accumulateur au lithium contenant un sel de lithium du type LiN(CₙF₂ₙ₊₁SO₂)₂ avec n=1, 2, 3 ou 4 et/ou du type LiC(CₘF₂ₘ₊₁SO₂)₃ avec m=1, 2, 3 ou 4, dissous dans un mélange d'un carbonate cyclique saturé, substitué ou non par un ou plusieurs atomes d'halogène et d'un carbonate linéaire substitué ou non par un ou plusieurs atomes d'halogène. Cette composition d'électrolyte a pour avantage d'améliorer la conservation de la charge de l'accumulateur, en particulier au cours d'un stockage prolongé de l'accumulateur à haute température (60°C).

La publication de Y. Sasaki et al. du 23-25 avril 2003 au cours du 3^{è} séminaire franco-japonais sur la chimie organique et l'électrochimie du fluor, intitulée « Physical and electrolytic properties of monofluorinated dimethyl carbonate » décrit qu'un mélange de carbonate de diméthyle monofluoré et de carbonate d'éthylène est adapté comme électrolyte d'accumulateur au lithium fonctionnant en cyclage à 25°C.

Le document EP-A-0 548 449 décrit un mélange d'un carbonate cyclique saturé, d'un carbonate linéaire saturé et d'un carboxylate aliphatique (i.e. un ester ) pour électrolyte d'un accumulateur au lithium. Cet accumulateur présente de bonnes performances en décharge à -10°C.

Le document EP-A-1 150 374 décrit un accumulateur au lithium à électrolyte gélifié dont le solvant est constitué d'un mélange de carbonate d'éthylène substitué par un ou plusieurs atome(s) d'halogène avec un ou plusieurs carbonate(s) cyclique(s) et/ou un ou plusieurs carbonate(s) linéaire(s). Un tel accumulateur possède de bonnes performances en décharge à -20°C.

Le document JP 2004-014134 décrit un électrolyte comprenant un carbonate linéaire saturé substitué par du fluor, par exemple du carbonate de diméthyle monofluoré, en mélange avec d'autres solvants non aqueux, dont le nombre et la nature ne sont pas spécifiquement limités. Un accumulateur comprenant un tel électrolyte possède un rendement élevé en charge et en décharge et ses performances, au cours d'un stockage prolongé à haute température, ne sont pas altérées.

Le document US 2001/0019800 décrit un accumulateur rechargeable au lithium utilisable à basse température. Cet accumulateur comprend un électrolyte contenant un sel de lithium dissous dans un solvant non-aqueux. Ce solvant non-aqueux contient au moins un carbonate cyclique saturé et au moins un ester linéaire d'un acide monocarboxylique aliphatique saturé.

Aucun des documents ne décrit l'accumulateur selon l'invention.

### RESUME DE L'INVENTION

L'invention fournit un mélange de solvants pour électrolyte d'accumulateur lithium, lequel mélange de solvants comprend par rapport au volume dudit mélange,
50 à 95 % en volume d'un ester linéaire d'un acide saturé en C₂ à C₈, et
5 à 50 % en volume d'un carbonate cyclique saturé en C₃ à C₆ et d'un carbonate linéaire saturé en C₃ à C₆, l'un seulement des deux carbonates étant substitué par au moins un atome d'halogène.

L'accumulateur selon l'invention est adapté pour fonctionner à des températures pouvant aller jusqu'à -60°C.

L'invention a aussi pour objet l'utilisation d'un accumulateur selon l'invention à des températures pouvant aller jusqu'à -60°C.

### BREVE DESCRIPTION DES FIGURES

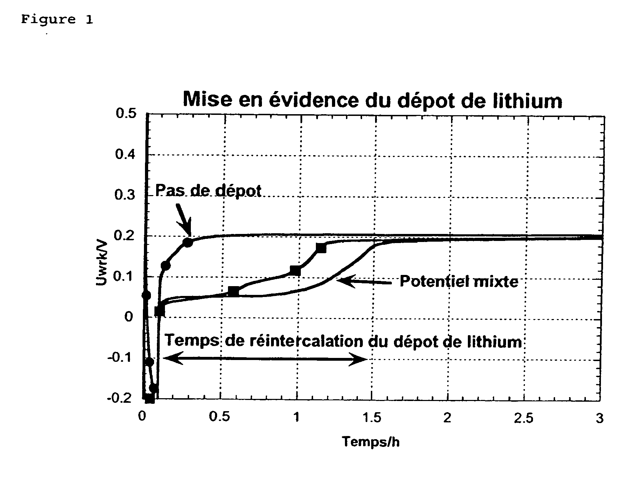

La Figure 1 est un schéma illustrant le principe des tests en charge à basse température.

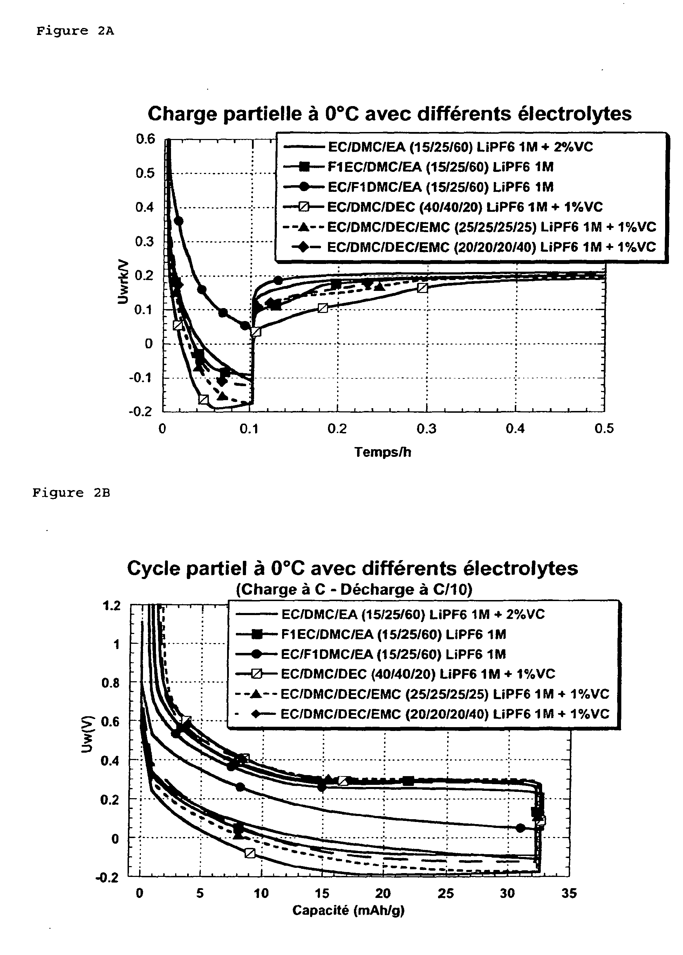

La Figure 2A représente la variation de la tension d'accumulateurs, remplis de différents électrolytes, après une charge partielle à 10 % de la capacité, à un régime de C, à 0°C. La Figure 2B représente la variation de la tension de ces accumulateurs au cours d'un cyclage partiel à 0°C (charge à C - décharge à C/10).

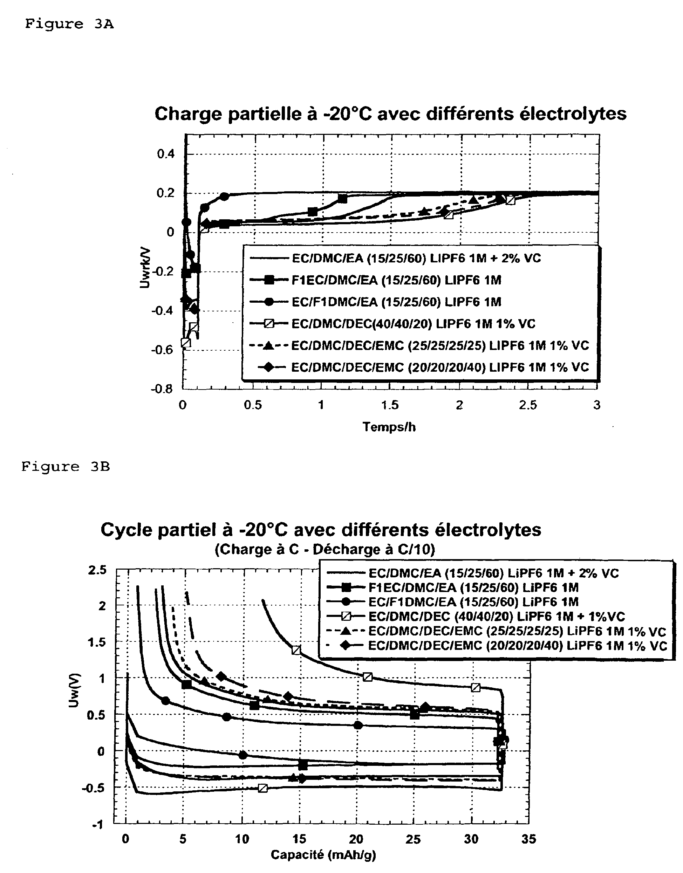

La Figure 3A représente la variation de la tension d'accumulateurs, remplis de différents électrolytes, après une charge partielle à 10 % de la capacité, à un régime de C, à -20°C. La Figure 3B représente la variation de la tension de ces accumulateurs au cours d'un cyclage partiel à -20°C (charge à C - décharge à C/10).

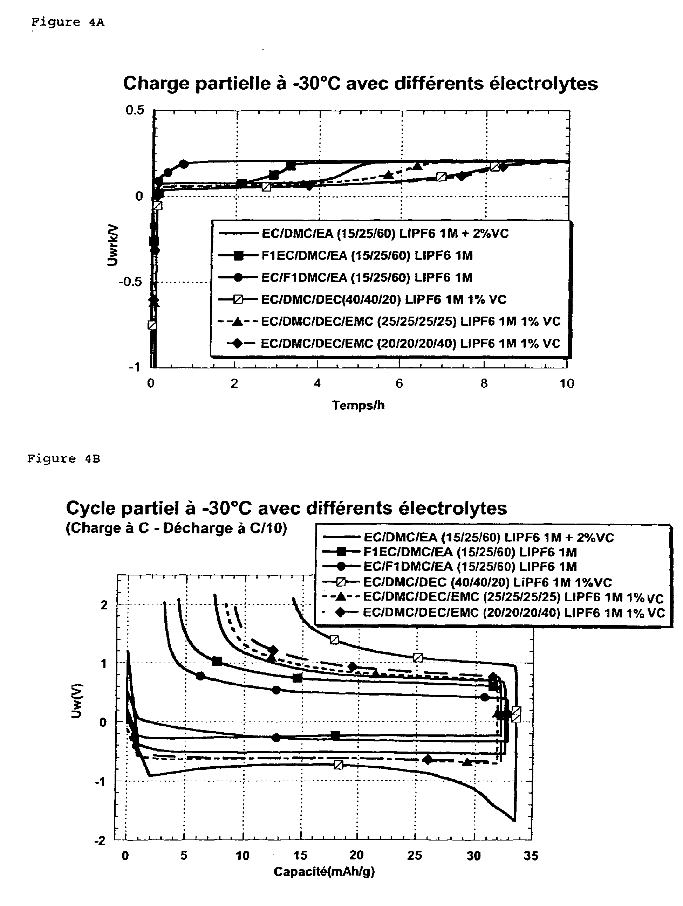

La Figure 4A représente la variation de la tension d'accumulateurs, remplis de différents électrolytes, après une charge partielle à 10 % de la capacité, à un régime de C, à -30°C. La Figure 4B représente la variation de la tension de ces accumulateurs au cours d'un cyclage partiel à -30°C (charge à C - décharge à C/10).

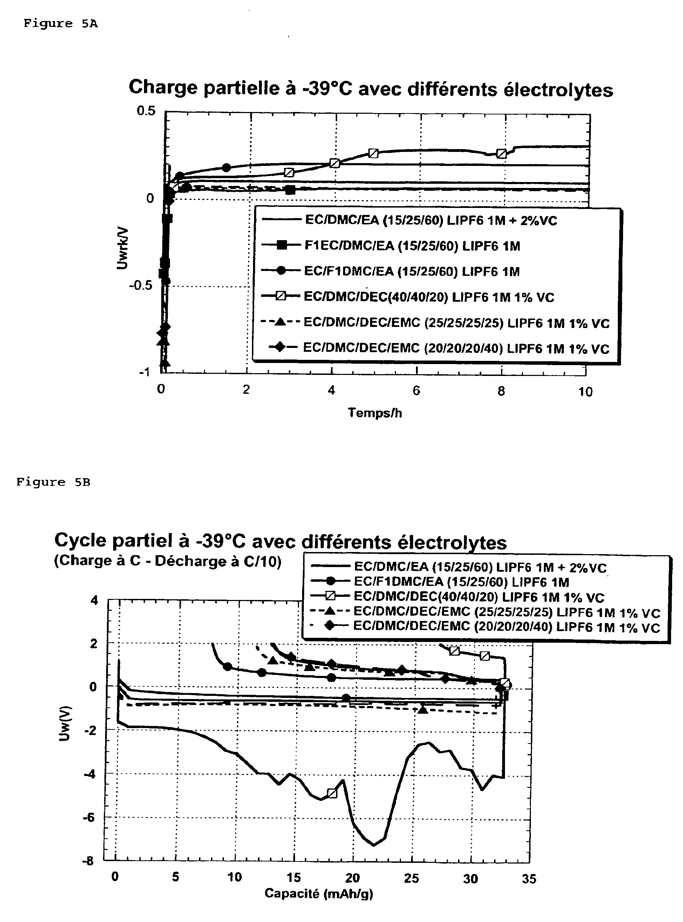

La Figure 5A représente la variation de la tension d'accumulateurs, remplis de différents électrolytes, après une charge partielle à 10 % de la capacité, à un régime de C, à -39°C. La Figure 5B représente la variation de la tension de ces accumulateurs au cours d'un cyclage partiel à -39°C (charge à C - décharge à C/10).

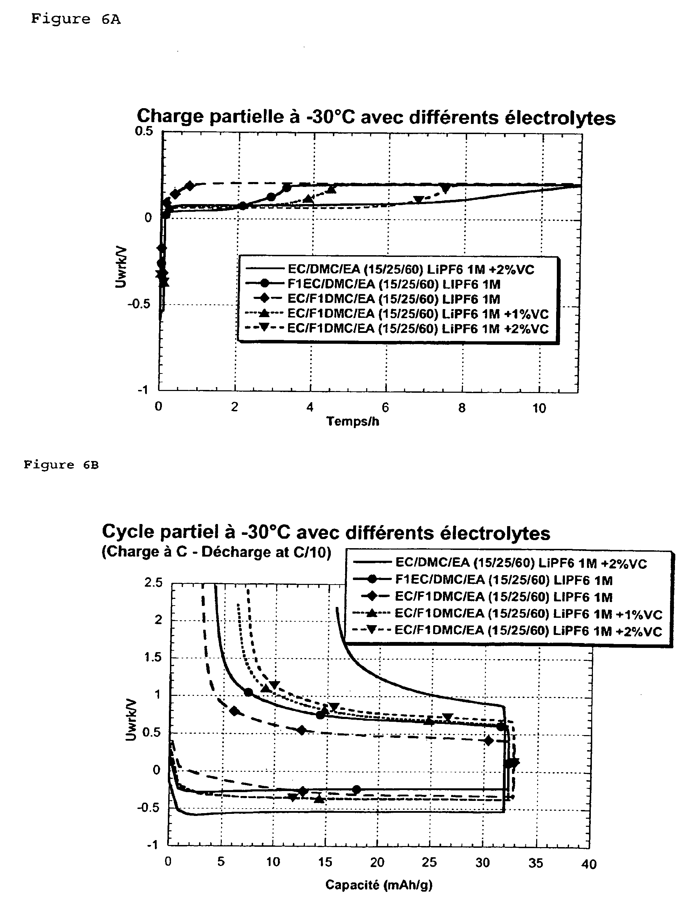

La Figure 6A représente la variation de la tension d'accumulateurs, remplis de différents électrolytes comprenant en outre du carbonate de vinylène, après une charge partielle à 10 % de la capacité, à un régime de C, à -30°C. La Figure 6B représente la variation de la tension de ces accumulateurs au cours d'un cyclage partiel à -30°C (charge à C - décharge à C/10.

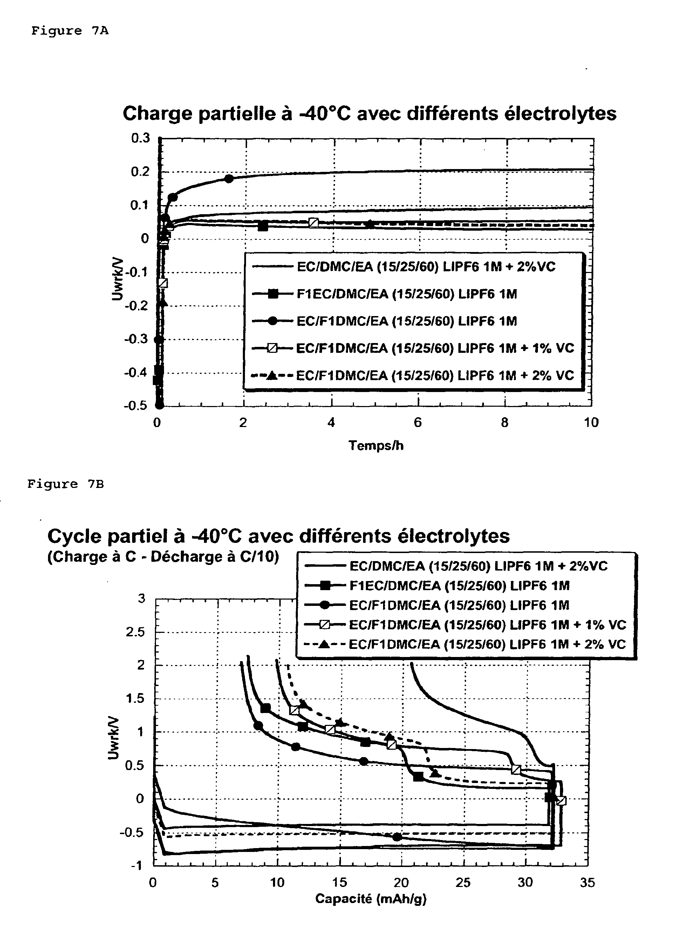

La Figure 7A représente la variation de la tension d'accumulateurs, remplis de différents électrolytes comprenant en outre du carbonate de vinylène, après une charge partielle à 10 % de la capacité, à un régime de C, à -40°C. La Figure 7B représente la variation de la tension de ces accumulateurs au cours d'un cyclage partiel à -40°C (charge à C - décharge à C/10.

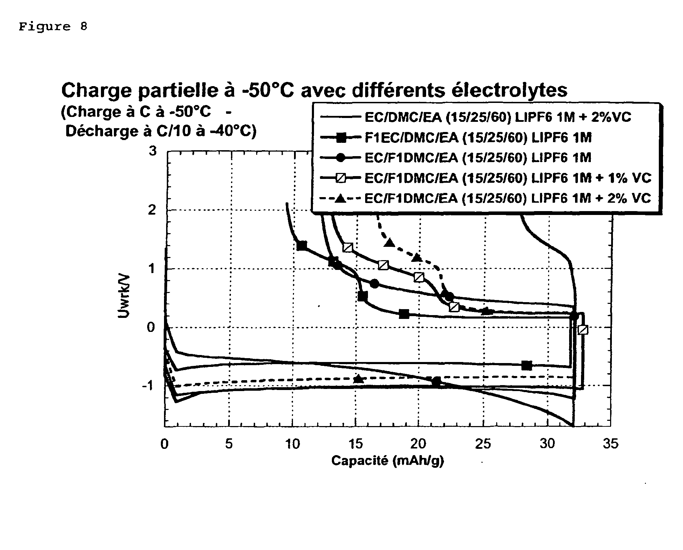

La Figure 8 représente la variation de la tension d'accumulateurs remplis de différents électrolytes comprenant en outre du carbonate de vinylène, au cours d'un cyclage partiel(charge à C à -50°C et décharge à C/10 à -40°C).

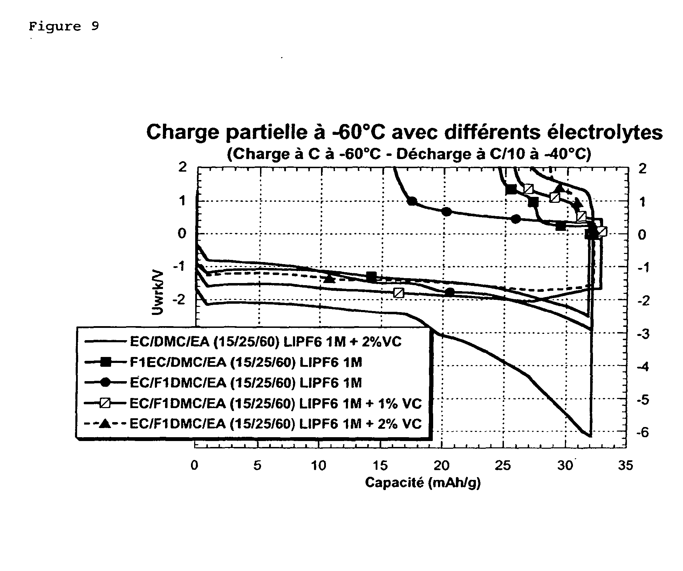

La Figure 9 représente la variation de la tension d'accumulateurs remplis de différents électrolytes comprenant en outre du carbonate de vinylène, au cours d'un cyclage partiel(charge à C à -60°C et décharge à C/10 à -40°C).

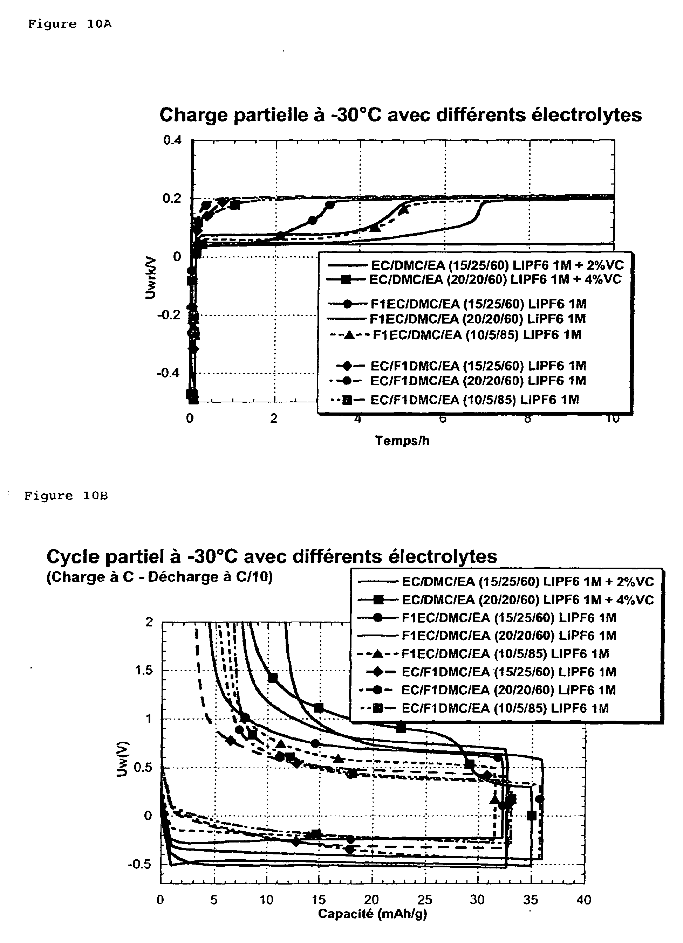

La Figure 10A représente la variation de la tension d'accumulateurs, remplis de différents électrolytes, après une charge partielle à 10 % de la capacité, à un régime de C, à -30°C. La Figure 10B représente la variation de la tension de ces accumulateurs au cours d'un cyclage partiel à -30°C (charge à C - décharge à C/10).

### EXPOSE DETAILLE DES MODES DE REALISATION DE L'INVENTION

La présente invention a pour but de réduire la polarisation de l'électrode négative d'un accumulateur au lithium au cours de la charge de cet accumulateur à très basse température, c'est-à-dire à une température inférieure à -20°C. A cet effet, l'invention propose un mélange de solvants organiques pour électrolyte d'accumulateur au lithium à anode de carbone dont les performances en charge à très basses températures (de - 20°C à -60°C) sont améliorées par rapport à celles d'un accumulateur au lithium conventionnel.

La présente invention fournit un mélange ternaire de solvants organiques pour électrolyte d'accumulateur lithium, lequel mélange de solvants comprend par rapport au volume dudit mélange,
50 à 95 % en volume d'un ester linéaire d'un acide saturé en C₂ à C₈, et
5 à 50 % en volume d'un carbonate cyclique saturé en C₃ à C₆ et d'un carbonate linéaire saturé en C₃ à C₆, l'un seulement des deux carbonates étant substitué par au moins un atome d'halogène.

Selon un mode de réalisation, le carbonate substitué est monosubstitué.

Selon un mode de réalisation, le au moins un atome d'halogène est du fluor.

On entend en général par ester linéaire d'un acide saturé ou carboxylate aliphatique saturé, un composé de formule R-CO-OR' dans laquelle R est H ou un groupe alkyle et R' est un groupe alkyle tel que CH₃ (méthyle), CH₃-CH₂ (éthyle), etc. Ledit ester linéaire d'un acide monocarboxylique aliphatique saturé est par exemple un formiate si R est H, un acétate si R est CH₃, un propionate si R est CH₃-CH₂, un butyrate si R est CH₃₋(CH₂)₂, un valériate si R est CH₃-(CH₂)₃, etc.

Ledit ester linéaire est par exemple choisi parmi un acétate, un butyrate et un propionate. On choisira par exemple un acétate d'éthyle, un acétate de méthyle, un acétate de propyle, un butyrate d'éthyle, un butyrate de méthyle, un butyrate de propyle, un propionate d'éthyle, un propionate de méthyle, un propionate de propyle.
Selon un mode de réalisation, ledit ester linéaire est l'acétate d'éthyle (EA).

Ledit carbonate cyclique saturé est choisi par exemple parmi le carbonate de propylène, le carbonate d'éthylène, et le carbonate de butylène.
Selon un mode de réalisation, ledit carbonate cyclique saturé est le carbonate d'éthylène (EC).

Ledit carbonate linéaire saturé est par exemple choisi parmi le carbonate de diméthyle, le carbonate de diéthyle, le carbonate de méthyle éthyle, le carbonate de méthyle propyle.

Selon un mode de réalisation, ledit carbonate cyclique linéaire est le carbonate de diméthyle (DMC).

Selon un mode de réalisation, la proportion volumique d'ester linéaire est de 60 à 85 % du mélange de solvants.

La proportion volumique dans le mélange dudit carbonate cyclique saturé, qu'il soit substitué ou non par un ou plusieurs atomes d'halogène, est de préférence de 3 à 30 % par rapport au volume total de solvant. De préférence, la proportion de carbonate cyclique saturé, substitué ou non par un ou plusieurs atomes d'halogène, est de 10 à 20% par rapport au volume total de solvant.

La proportion volumique dans le mélange dudit carbonate linéaire saturé, qu'il soit substitué ou non par un ou plusieurs atomes d'halogène, est de préférence de 3 à 30 % par rapport au volume total de solvant. De préférence, la proportion de carbonate linéaire saturé, substitué ou non par un ou plusieurs atomes d'halogène, est de 5 à 25% par rapport au volume total de solvant.

Selon un mode de réalisation, le mélange de solvants est constitué de carbonate d'éthylène, de carbonate de diméthyle monofluoré (F1DMC) et d'acétate d'éthyle en proportions volumiques de 10-20 %, 20-30 % et 50-70 % respectivement.

Selon un mode de réalisation, le mélange de solvants est constitué de carbonate d'éthylène monofluoré (F1EC), de carbonate de diméthyle et d'acétate d'éthyle en proportions volumiques de 10-20 %, 20-30 % et 50-70 % respectivement.

Le mélange de solvants ne contient de préférence pas de carbonate cyclique insaturé. Font partie de la famille des carbonates cycliques insaturés les composés tels que le carbonate de vinylène (VC) et ses dérivés, notamment le carbonate de propylidène, le carbonate d'éthylidène éthylène, le carbonate d'isopropylidène éthylène. On entend par dérivés du carbonate de vinylène, des composés possédant au moins une liaison insaturée à un atome de carbone du cycle, comme par exemple, le carbonate de propylidène, le carbonate d'éthylidène éthylène (ou 4-éthylidène 1-3 dioxolane 2 one), ou le carbonate d'isopropylidène éthylène (ou 4-isopropylidène 1-3 dioxolane 2 one). De préférence, la quantité de carbonate de vinylène sera inférieure à 0,1 % en volume, de préférence nulle.

Un sel de lithium est dissous dans le mélange de solvants selon l'invention. Le sel de lithium est par exemple choisi parmi l'hexafluorophosphate de lithium (LiPF₆), le perchlorate de lithium (LiClO₄), l'hexafluoroarsénate de lithium (LiAsF₆), le tétrafluoroborate de lithium (LiBF₄), le trifluorométhanesulfonate de lithium LiCF₃SO₃, le trifluorométhane sulfonimide de lithium LiN(CF₃SO₂)₂ (LiTFSI) ou le trifluorométhanesulfoneméthide de lithium LiC(CF₃SO₂)₃ (LiTFSM). Le mélange de solvants additionné de sel de lithium constitue l'électrolyte de l'accumulateur au lithium.

L'accumulateur selon l'invention comprend au moins une électrode positive, au moins une électrode négative contenant un liant et une matière électrochimiquement active qui est un carbone apte à insérer des ions lithium et un électrolyte liquide tel que décrit ci-dessus.

Le liant de l'électrode négative comprend de préférence un polymère non fluoré choisi parmi : copolymère de styrène et de butadiène, copolymère d'acrylonitrile et de butadiène, homopolymère de l'acide acrylique, carboxyméthylcellulose et les mélanges de ceux-ci.

Selon un mode de réalisation, le polymère est un mélange d'un copolymère de styrène et de butadiène et de carboxyméthylcellulose.

De préférence, la proportion pondérale du copolymère de styrène et de butadiène est comprise entre 30 et 70 % dudit liant et la proportion pondérale de carboxyméthylcellulose est comprise entre 30 et 70 % dudit liant.

La présente invention a aussi pour objet l'utilisation d'un tel générateur à des températures allant jusqu'à -60°C.

D'autres caractéristiques et avantages de la présente invention apparaîtront au cours des exemples suivants de réalisation, donnés à titre illustratif et non limitatif.

### EXEMPLES

### Fabrication des accumulateurs

On prépare six accumulateurs de type bouton comportant chacun comme électrode de travail, une électrode négative de graphite, comme contre-électrode et électrode de référence du lithium métallique, et un séparateur en polypropylène. Un mélange de carboxyméthylcellulose et d'un copolymère de styrène et de butadiène (CMC/SBR) est utilisé comme liant de la matière active négative. Les six accumulateurs diffèrent par la composition de leur électrolyte. On prépare six mélanges de solvants auxquels on ajoute comme sel de lithium LiPF₆, dissous à une concentration de 1 mole.L⁻¹. La composition des six mélanges de solvants est indiquée dans le Tableau 1 ci-dessous.

On place un séparateur de polypropylène entre les électrodes pour former un faisceau électrochimique.

On imprègne le faisceau électrochimique d'électrolyte. On ferme les boîtiers des accumulateurs.

**Tableau 1 : Composition des mélanges de solvants**

| **Référence** | **Composition du mélange de solvants** |
|---|---|
| Accumulateur 1a | EC/DMC/EA (15/25/60) + 2% VC |
| Accumulateur 2a | F1EC/DMC/EA (15/25/60) sans VC |
| Accumulateur 3a | EC/F1DMC/EA (15/25/60) sans VC |
| Accumulateur 4a | EC/DMC/DEC (40/40/20) + 1% VC |
| Accumulateur 5a | EC/DMC/DEC/EMC (25/25/25/25) + 1% VC |
| Accumulateur 6a | EC/DMC/DEC/EMC (20/20/20/40) + 1% VC |

Les pourcentages de solvant sont des pourcentages volumiques par rapport au volume total de solvants.
Dans les accumulateurs 1a, 4a, 5a et 6a contenant du carbonate de vinylène, celui-ci est ajouté après avoir réalisé le mélange des autres solvants de l'électrolyte. La proportion de carbonate de vinylène indiquée est une proportion massique par rapport à 100 % du poids du mélange des autres solvants.

### Tests à basse température.

Après une formation électrochimique à 60°C et un cycle à température ambiante les accumulateurs sont testés selon un mode opératoire, mis au point par la demanderesse, permettant de mettre en évidence la présence ou non de dépôt métallique de lithium à la surface de l'électrode négative. Le principe de ce test est illustré Figure 1.

Le principe de ce test est le suivant : les accumulateurs subissent des charges partielles à 10 % de leur capacité, à un régime de C, aux températures suivantes : 0°C, -20°C, -30°C et -39°C. Ce régime élevé ainsi que la faible température (conductivité ionique de l'électrolyte très faible) augmente la polarisation de l'électrode négative, ce qui dans certains cas, entraîne un dépôt de lithium à la surface. Pendant la relaxation qui suit cette charge partielle, le lithium déposé se réinsère dans la structure du graphite donnant lieu à un potentiel mixte (lithium déjà inséré pendant la charge et lithium en cours de réinsertion) comme le montre la Figure 1. En suivant l'évolution de la tension, on peut donc quantifier le temps de réinsertion du lithium dans le graphite. Plus le temps de réinsertion est élevé, plus le dépôt de lithium à la surface de l'électrode est important.

Les essais de charge partielle réalisés sur les accumulateurs 1a-6a, (Figures 2A, 3A, 4A et 5A), montrent que les temps de réinsertion du dépôt de lithium les plus faibles sont obtenus pour les accumulateurs 2a et 3a remplis d'un électrolyte selon l'invention. Un temps de réinsertion quasi nul est obtenu avec l'accumulateur 3a rempli d'un électrolyte comprenant un mélange EC/F1DMC/EA (15/25/60) sans VC aux quatre températures d'essai. Ceci indique pour cet accumulateur l'absence ou la présence en très faible quantité d'un dépôt de lithium à la surface de l'électrode négative.

Les accumulateurs la à 6a ont également subi un test de cyclage partiel consistant en une étape de charge au régime de C suivie d'une étape de décharge au régime de C/10. Les tensions mesurées au cours de la charge et de la décharge sont représentées Figures 2B, 3B, 4B et 5B pour les températures de 0°C, -20°C, -30°C et -39°C respectivement. On constate que la différence entre la tension en charge et la tension en décharge est la plus faible pour les accumulateurs 2a et 3a remplis d'un électrolyte selon l'invention. Ceci signifie que les accumulateurs 2a et 3a ont la résistance de polarisation la plus faible.

L'utilisation d'un électrolyte selon l'invention permet donc de réduire de façon significative la polarisation de l'électrode négative.

### Influence de la présence d'un carbonate cyclique insaturé sur la polarisation de l'électrode négative.

L'influence de la présence d'un carbonate cyclique insaturé dans l'électrolyte sur la polarisation de l'électrode négative a été évaluée. A cet effet, les accumulateurs 7a et 8a ont été fabriqués et testés. Ces accumulateurs sont remplis d'un électrolyte comprenant en outre un carbonate cyclique insaturé qui est du carbonate de vinylène (VC). Les compositions des électrolytes des accumulateurs 7a et 8a sont indiquées dans le Tableau 2 ci-dessous.

**Tableau 2 : Composition des mélanges de solvants des accumulateurs 7a et 8a**

| **Référence** | **Composition du mélange de solvants** |
|---|---|
| Accumulateur 7a | EC/F1DMC/EA (15/25/60) + 1% VC |
| Accumulateur 8a | EC/F1DMC/EA (15/25/60) + 2% VC |

Les accumulateurs 7a et 8a ont été testés en comparaison avec les accumulateurs 1a, 2a et 3a. Les résultats des essais menés aux températures de -30°C, - 40°C, -50°C et -60°C sont représentés respectivement Figure 6A, Figure 7A, Figure 8 et Figure 9.

La figure 6A montre que les temps de réinsertion du lithium les plus faibles sont obtenus pour les accumulateurs 2a et 3a contenant un carbonate monosubstitué par du fluor et ne contenant pas de carbonate de vinylène.

Les accumulateurs 7a et 8a contenant du carbonate de diméthyle monofluoré et du carbonate de vinylène ont une polarisation supérieure à celle des accumulateurs 2a et 3a.

L'accumulateur 1a ne contenant pas de carbonate monosubstitué par du fluor et contenant du carbonate de vinylène, présente la polarisation la plus élevée.

Ces résultats sont confirmés par les résultats des essais de cyclage partiel représentés Figure 6B.

Les Figures 7A, 7B, 8 et 9, correspondant à des essais réalisés à des températures encore plus basses que celle des essais des Figures 6A et 6B, montrent que seul l'électrolyte de l'accumulateur 3a ne dépose pas de lithium (pas de potentiel mixte, ni pendant la relaxation, ni pendant la décharge) et présente la capacité la plus élevée.

Parmi les autres électrolytes présentant un dépôt de lithium, la meilleure capacité réversible et la plus faible polarisation sont obtenues pour l'accumulateur 2a.

Les accumulateurs 7a et 8a, dont l'électrolyte contient du carbonate de vinylène, donnent de moins bons résultats que l'accumulateur 2a.

Le moins bon résultat est obtenu avec l'accumulateur 1a, qui présente une polarisation importante et une très faible capacité réversible.

### Variantes de l'invention :

Quatre accumulateurs ont été préparés comme variantes de l'invention. Il s'agit des accumulateurs 2b, 2c, 3b et 3c. Les accumulateurs 2b, 2c ont été préparés de la même manière que l'accumulateur 2a à l'exception du fait que les proportions en volume des différents solvants ont été modifiées. Les accumulateurs 3b et 3c ont été préparés de la même manière que l'accumulateur 3a à l'exception du fait que les proportions en volume des différents solvants ont été modifiées. L'accumulateur 1b a été fabriqué et testé ainsi que l'accumulateur 1a à titre de comparaison avec les accumulateurs de l'invention.

Le Tableau 3 indique les compositions des mélanges de solvants utilisés.

**Tableau 3 : Composition des mélanges de solvants pour les accumulateurs**

| **Référence** | **Composition du mélange de solvants** |
|---|---|
| Accumulateur la | EC/DMC/EA (15/25/60) + 2% VC |
| Accumulateur 1b | EC/DMC/EA (20/20/60) + 4% VC |
| Accumulateur 2a | F1EC/DMC/EA (15/25/60) sans VC |
| Accumulateur 2b | F1EC/DMC/EA (20/20/60) sans VC |
| Accumulateur 2c | F1EC/DMC/EA (10/5/85) sans VC |
| Accumulateur 3a | EC/F1DMC/EA (15/25/60) sans VC |
| Accumulateur 3b | EC/F1DMC/EA (20/20/60) sans VC |
| Accumulateur 3c | EC/F1DMC/EA (10/5/85) sans VC |

Des essais de charge partielle ainsi que des essais de cyclage partiel ont été effectués à -30°C pour ces accumulateurs.

Les résultats des essais de charge partielle sont représentés Figure 10A. Les temps de réinsertion du lithium les plus faibles sont obtenus pour les accumulateurs 3a, 3b et 3c remplis d'un mélange de solvants EC/F1DMC/EA. Ces accumulateurs ne présentent pas de dépôt de lithium. Parmi les accumulateurs 2a, 2b et 2C, l'accumulateur présentant le plus faible dépôt de lithium est l'accumulateur 2a comprenant un mélange de solvants F1EC/DMC/EA dans les proportions 15/25/60.

Les résultats des essais de cyclage partiel sont représentés Figure 10B. On constate que la différence entre la tension en charge et la tension en décharge est plus faible pour les accumulateurs 2a, 2b, 2c, 3a, 3b et 3c remplis d'un électrolyte selon l'invention que pour les accumulateurs 1a et 1b ne faisant pas partie de l'invention. Les accumulateurs 3a, 3b et 3c ont donc la résistance de polarisation la plus faible.

L'utilisation d'un électrolyte selon l'invention permet donc de réduire de façon significative la polarisation de l'électrode négative.

Le présent mode de réalisation et les figures doivent être considérées comme ayant été présentés à titre illustratif et non restrictif, et l'invention n'est pas censée être limitée aux détails fournis ici mais peut être modifiée en restant dans le cadre de la portée des revendications annexées. En particulier, le carbonate substitué peut être plurisubstitué par un halogène.

## Revendications

1. Mélange de solvants comprenant par rapport au volume dudit mélange,
50 à 95 % en volume d'un ester linéaire d'un acide saturé en C₂ à C₈, et
5 à 50 % en volume d'un carbonate cyclique saturé en C₃ à C₆ et d'un carbonate linéaire saturé en C₃ à C₆, l'un seulement des deux carbonates étant substitué par au moins un atome d'halogène.

2. Mélange de solvants selon la revendication 1, dans lequel le carbonate substitué est monosubstitué.

3. Mélange de solvants selon la revendication 1, dans lequel le au moins un atome d'halogène est du fluor.

4. Mélange de solvants selon l'une des revendications précédentes, dans lequel ledit ester linéaire est choisi parmi l'acétate d'éthyle, l'acétate de méthyle, l'acétate de propyle, le butyrate d'éthyle, le butyrate de méthyle, le butyrate de propyle, le propionate d'éthyle, le propionate de méthyle, le propionate de propyle.

5. Mélange de solvants selon la revendication 4, dans lequel ledit ester linéaire est l'acétate d'éthyle.

6. Mélange de solvants selon l'une des revendications précédentes, dans lequel le carbonate cyclique saturé est choisi parmi le carbonate d'éthylène, le carbonate de propylène et le carbonate de butylène.

7. Mélange de solvants selon la revendication 6, dans lequel le carbonate cyclique saturé est le carbonate d'éthylène.

8. Mélange de solvants selon l'une des revendication précédentes, dans lequel le carbonate linéaire saturé est choisi parmi le carbonate de diméthyle, le carbonate de diéthyle, le carbonate de méthyle éthyle, le carbonate de méthyle propyle.

9. Mélange de solvants selon la revendication 8, dans lequel le carbonate linéaire saturé est le carbonate de diméthyle.

10. Mélange de solvants selon l'une des revendications précédente, dans lequel la proportion volumique d'ester linéaire est de 60 à 85 % par rapport au volume total de solvant.

11. Mélange de solvants selon l'une des revendications précédentes, dans lequel la proportion volumique de carbonate cyclique saturé est de 3 à 30 % par rapport au volume total de solvant.

12. Mélange de solvants selon la revendication 11, dans lequel la proportion volumique de carbonate cyclique saturé est de 10 à 20 % par rapport au volume total de solvant.

13. Mélange de solvants selon l'une des revendications précédentes, dans lequel la proportion volumique de carbonate linéaire saturé est de 3 à 30 % par rapport au volume total de solvant.

14. Mélange de solvants selon la revendication 13, dans lequel la proportion volumique de carbonate linéaire saturé est de 5 à 25% par rapport au volume total de solvant.

15. Mélange de solvants selon l'une des revendications précédentes, ne comprenant pas de carbonate cyclique insaturé.

16. Mélange de solvants selon l'une des revendications précédentes, constitué de carbonate d'éthylène, de carbonate de diméthyle monofluoré et d'acétate d'éthyle dans lequel les proportions volumiques de carbonate d'éthylène, de carbonate de diméthyle monofluoré et d'acétate d'éthyle son respectivement de 10-20 %, 20-30 % et 50-70 %.

17. Mélange de solvants selon l'une des revendications précédentes, constitué de carbonate d'éthylène monofluoré, de carbonate de diméthyle et d'acétate d'éthyle dans lequel les proportions volumiques de carbonate d'éthylène monofluoré, de carbonate de diméthyle et d'acétate d'éthyle sont respectivement de 10-20 %, 20-30 % et 50-70 %.

18. Electrolyte liquide comprenant un sel de lithium dissous dans un mélangé de solvants selon l'une des revendications précédentes.

19. Accumulateur au lithium comprenant
- au moins une électrode positive,
- au moins une électrode négative contenant un liant et une matière électrochimiquement active qui est un carbone apte à insérer des ions lithium,
- et un électrolyte liquide selon la revendication 18.

20. Accumulateur selon la revendication 19, dans lequel le liant est un polymère exempt de fluor.

21. Accumulateur selon la revendication 20, dans lequel le polymère est choisi parmi copolymère de styrène et de butadiène, copolymère d'acrylonitrile et de butadiène, homopolymère de l'acide acrylique, carboxyméthylcellulose et les mélanges de ceux-ci.

22. Accumulateur selon la revendication 21, dans lequel le polymère est un mélange d'un copolymère de styrène et de butadiène et de carboxyméthylcellulose.

23. Accumulateur selon l'une des revendications 19 à 22, adapté pour fonctionner à des températures jusqu'à -60°C.

24. Utilisations d'un accumulateur selon l'une des revendications 19 à 23, à des températures jusqu'à -60°C.

## Claims

1. Mixture of solvents comprising with respect to the volume of said mixture,
50 to 95 % by volume of a linear ester of a C₂ to C₈ saturated acid, and
5 to 50 % by volume of a C₃ to C₆ saturated cyclic carbonate and a C₃ to C₆ saturated linear carbonate, only one of the two carbonates being substituted by at least one halogen atom.

2. Mixture of solvents according to claim 1, in which the substituted carbonate is monosubstituted.

3. Mixture of solvents according to claim 1, in which the at least one halogen atom is fluorine.

4. Mixture of solvents according to one of the preceding claims, in which said linear ester is chosen from the group consisting of ethyl acetate, methyl acetate, propyl acetate, ethyl butyrate, methyl butyrate, propyl butyrate, ethyl propionate, methyl propionate, propyl propionate.

5. Mixture of solvents according to claim 4, in which said linear ester is ethyl acetate.

6. Mixture of solvents according to one of the preceding claims, in which the saturated cyclic carbonate is chosen from the group consisting of ethylene carbonate, propylene carbonate and butylene carbonate.

7. Mixture of solvents according to claim 6, in which the saturated cyclic carbonate is ethylene carbonate.

8. Mixture of solvents according to one of the preceding claims, in which the saturated linear carbonate is chosen from the group consisting of dimethyl carbonate, diethyl carbonate, methyl ethyl carbonate and methyl propyl carbonate.

9. Mixture of solvents according to claim 8, in which the saturated linear carbonate is dimethyl carbonate.

10. Mixture of solvents according to one of the preceding claims, in which the proportion by volume of linear ester is 60 to 85 % in relation to the total volume of solvent.

11. Mixture of solvents according to one of the preceding claims, in which the proportion by volume of saturated cyclic carbonate is 3 to 30 % in relation to the total volume of solvent.

12. Mixture of solvents according to claim 11, in which the proportion by volume of saturated cyclic carbonate is 10 to 20 % in relation to the total volume of solvent.

13. Mixture of solvents according to one of the preceding claims, in which the proportion by volume of saturated linear carbonate is 3 to 30 % in relation to the total volume of solvent.

14. Mixture of solvents according to claim 13, in which the proportion by volume of saturated linear carbonate is 5 to 25 % in relation to the total volume of solvent.

15. Mixture of solvents according to one of the preceding claims, not comprising unsaturated cyclic carbonate.

16. Mixture of solvents according to one of the preceding claims, constituted by ethylene carbonate, monofluorinated dimethyl carbonate and ethyl acetate in which the proportions by volume of ethylene carbonate, monofluorinated dimethyl carbonate and ethyl acetate are respectively 10-20 %, 20-30 % and 50-70 %.

17. Mixture of solvents according to one of the preceding claims, constituted by monofluorinated ethylene carbonate, dimethyl carbonate and ethyl acetate in which the proportions by volume of monofluorinated ethylene carbonate, dimethyl carbonate and ethyl acetate are respectively 10-20 %, 20-30 % and 50-70 %.

18. Liquid electrolyte comprising a lithium salt dissolved in a mixture of solvents according to one of the preceding claims.

19. Lithium battery comprising
- at least one positive electrode,
- at least one negative electrode containing a binder and an electrochemically active material which is a carbon capable of inserting lithium ions,
- and a liquid electrolyte according to claim 18.

20. Battery according to claim 19, in which the binder is a non-fluorinated polymer.

21. Battery according to claim 20, in which the polymer is chosen from the group consisting of styrene and butadiene copolymer, acrylonitrile and butadiene copolymer, acrylic acid homopolymer, carboxymethyl cellulose and mixtures thereof.

22. Battery according to claim 21, in which the polymer is a mixture of a styrene and butadiene copolymer and carboxymethyl cellulose.

23. Battery according to one of claims 19 to 22, which is able to operate at temperatures of down to -60°C.

24. Use of a battery according to one of claims 19 to 23, at temperatures of down to -60°C.

## Patentansprüche

1. Lösemittelgemisch umfassend, bezogen auf das Volumen des Gemischs,
50 bis 95 Vol.-% eines linearen Esters einer gesättigten Säure mit 2 bis 8 C-Atomen, und
5 bis 50 Vol.-% eines gesättigten zyklischen Carbonats mit 3 bis 6 C-Atomen und einem linearen gesättigten Carbonat mit 3 bis 6 C-Atomen, wobei nur eines dieser beiden Carbonate mit mindestens einem Halogenatom substituiert ist.

2. Lösemittelgemisch nach Anspruch 1, wobei das substituierte Carbonat monosubstituiert ist.

3. Lösemittelgemisch nach Anspruch 1, wobei das mindestens eine Halogenatom Fluor ist.

4. Lösemittelgemisch nach einem der vorhergehenden Ansprüche, wobei der lineare Ester ausgewählt ist aus Ethylacetat, Methylacetat, Propylacetat, Ethylbutyrat, Methylbutyrat, Propylbutyrat, Ethylpropionat, Methylpropionat, Propylpropionat.

5. Lösemittelgemisch nach Anspruch 4, wobei der lineare Ester Ethylacetat ist.

6. Lösemittelgemisch nach einem der vorhergehenden Ansprüche, wobei das gesättigte zyklische Carbonat ausgewählt ist aus Ethylencarbonat, Propylencarbonat und Butylencarbonat.

7. Lösemittelgemisch nach Anspruch 6, wobei das gesättigte zyklische Carbonat Ethylencarbonat ist.

8. Lösemittelgemisch nach einem der vorhergehenden Ansprüche, wobei das gesättigte lineare Carbonat ausgewählt ist aus Dimethylcarbonat, Diethylcarbonat, Methylethylcarbonat, Methylpropylcarbonat.

9. Lösemittelgemisch nach Anspruch 8, wobei das gesättigte lineare Carbonat Dimethylcarbonat ist.

10. Lösemittelgemisch nach einem der vorhergehenden Ansprüche, wobei der Volumenanteil an linearem Ester bei 60 bis 85 % liegt, bezogen auf das Gesamtvolumen des Lösemittels.

11. Lösemittelgemisch nach einem der vorhergehenden Ansprüche, wobei der Volumenanteil an gesättigtem zyklischem Carbonat bei 3 bis 30 % liegt, bezogen auf das Gesamtvolumen des Lösemittels.

12. Lösemittelgemisch nach Anspruch 11, wobei der Volumenanteil an gesättigtem zyklischem Carbonat bei 10 bis 20 % liegt, bezogen auf das Gesamtvolumen des Lösemittels.

13. Lösemittelgemisch nach einem der vorhergehenden Ansprüche, wobei der Volumenanteil an gesättigtem linearem Carbonat bei 3 bis 30 % liegt, bezogen auf das Gesamtvolumen des Lösemittels.

14. Lösemittelgemisch nach Anspruch 13, wobei der Volumenanteil an gesättigtem linearem Carbonat bei 5 bis 25 % liegt, bezogen auf das Gesamtvolumen des Lösemittels.

15. Lösemittelgemisch nach einem der vorhergehenden Ansprüche, das kein ungesättigtes zyklisches Carbonat umfasst.

16. Lösemittelgemisch nach einem der vorhergehenden Ansprüche, bestehend aus Ethylencarbonat, monofluoriertem Dimethylcarbonat und Ethylacetat, wobei die Volumenanteile an Ethylencarbonat, monofluoriertem Dimethylcarbonat und Ethylacetat jeweils 10 bis 20 %, 20 bis 30 % bzw. 50 bis 70 % betragen.

17. Lösemittelgemisch nach einem der vorhergehenden Ansprüche, bestehend aus monofluoriertem Ethylencarbonat, Dimethylcarbonat und Ethylacetat, wobei die Volumenanteile an monofluoriertem Ethylencarbonat, Dimethylcarbonat und Ethylacetat jeweils 10 bis 20 %, 20 bis 30 % bzw. 50 bis 70 % betragen.

18. Flüssiger Elektrolyt, umfassend ein Lithiumsalz, das in einem Lösemittelgemisch nach einem der vorhergehenden Ansprüche gelöst ist.

19. Lithiumakkumulator, umfassend
- mindestens eine positive Elektrode,
- mindestens eine negative Elektrode, die ein Bindemittel und einen elektrochemisch aktiven Stoff enthält, der ein Kohlenstoff ist, der in der Lage ist, Lithiumionen einzuführen,
- und einen flüssigen Elektrolyt nach Anspruch 18.

20. Akkumulator nach Anspruch 19, wobei das Bindemittel ein Polymer ist, das frei von Fluor ist.

21. Akkumulator nach Anspruch 20, wobei das Polymer ausgewählt ist aus Styrol-Butadien-Copolymer, Acrylonitril-Butadien-Copolymer, Acrylsäure-Homopolymer, Carboxymethylcellulose und Gemischen davon.

22. Akkumulator nach Anspruch 21, wobei das Polymer ein Gemisch aus einem Styrol-Butadien-Copolymer und Carboxymethylcellulose ist.

23. Akkumulator nach einem der Ansprüche 19 bis 22, der angepasst ist, um bei Temperaturen bis zu -60 °C zu funktionieren.

24. Verwendung eines Akkumulators nach einem der Ansprüche 19 bis 23 bei Temperaturen bis zu -60 °C.
